Europäisches Patentamt

(19) European Patent Office

Office européen des brevets

(11) EP 0 811 155 B1

(12) EUROPÄISCHE PATENTSCHRIFT

(45) Veröffentlichungstag und Bekanntmachung des Hinweises auf die Patenterteilung:
07.01.1999 Patentblatt 1999/01

(21) Anmeldenummer: 96904716.6

(22) Anmeldetag: 23.02.1996

(51) Int Cl.⁶: **G01N 21/31**, B64D 15/20, B60R 16/02, G08B 19/02, G01B 11/30

(86) Internationale Anmeldenummer:
PCT/DE96/00347

(87) Internationale Veröffentlichungsnummer:
WO 96/26430 (29.08.1996 Gazette 1996/39)

(54) **VERFAHREN ZUM FESTSTELLEN DES OBERFLÄCHENZUSTANDES, INSBESONDERE VON VERKEHRSWEGEN, UND VORRICHTUNG ZUR DURCHFÜHRUNG DES VERFAHRENS**

PROCESS FOR DETERMINING THE SURFACE STATE OF HIGHWAYS IN PARTICULAR, AND DEVICE FOR CARRYING OUT THIS PROCESS

PROCEDE PERMETTANT DE DETERMINER L'ETAT DE LA SURFACE, NOTAMMENT DE VOIES DE COMMUNICATION, ET DISPOSITIF POUR LA MISE EN OEUVRE DUDIT PROCEDE

(84) Benannte Vertragsstaaten:
AT CH DE ES FR GB IT LI

(30) Priorität: 24.02.1995 DE 19506550

(43) Veröffentlichungstag der Anmeldung:
10.12.1997 Patentblatt 1997/50

(73) Patentinhaber: INSTITUT FUR CHEMO- UND BIOSENSORIK Münster E.V.
48149 Münster (DE)

(72) Erfinder:
• HUTH-FEHRE, Thomas
D-48165 Münster (DE)
• CAMMANN, Karl
D-48155 Münster (DE)
• KANTIMM, Thomas
D-48149 Münster (DE)

(74) Vertreter: Pfenning, Meinig & Partner
Kurfürstendamm 170
10707 Berlin (DE)

(56) Entgegenhaltungen:
DE-A- 4 008 280          DE-B- 2 712 199
US-A- 4 274 091          US-A- 5 180 122

**Beschreibung**

Die Erfindung bezieht sich auf ein Verfahren zum Feststellen des Oberflächenzustandes, insbesondere von Verkehrswegen, nach dem Oberbegriff des Hauptanspruchs sowie auf eine Vorrichtung zur Durchführung des Verfahrens.

Aus der DE 40 08 280 ist ein Verfahren zur berührungslosen Ermittlung des Fahrbahnoberflächenzustandes hinsichtlich Trockenheit, Nässe oder Vereisung bekannt, bei dem die zu untersuchende Oberfläche mit einer breitbandigen Lichtquelle beleuchtet und das reflektierte Licht selektiv in zwei Wellenlängenbereichen gleichzeitig gemessen wird. Die Meßwellenlängen liegen dabei in einem Wellenlängenbereich, in dem das Reflexionsverhalten eine spektrale Abhängigkeit vom Oberflächenzustand zeigt, nämlich im Wellenlängenbereich von 2700 nm bis 3200 nm, wobei von den Signalen bei zwei Wellenlängen dieses Wellenlängenbereichs der Quotient gebildet wird, der den Oberflächenzustand charakterisiert. Der jeweils ermittelte Signalquotient wird einem der Zustände trocken, naß oder vereist zugeordnet.

Das bekannte Verfahren hat den Nachteil, daß nur die direkte Oberfläche betrachtet wird und nicht der Zustand direkt unter der Oberfläche. Dies hat zur Folge, daß über- oder unterfrierende Nässe nicht erkannt werden kann, da bei den Wellenlängen von 2700 nm bis 3200 nm die Eindringtiefe der elektromagnetischen Strahlung in die Oberfläche äußerst gering ist. Insbesondere wird in der Druckschrift auch ausgeführt, daß unabhängig von der Schichtdicke der Nachweis des Oberflächenzustandes erbracht werden soll.

Der Erfindung liegt die Aufgabe zugrunde, ein Verfahren zum Feststellen des Oberflächenzustandes insbesondere von Verkehrswegen hinsichtlich Trockenheit, Nässe oder Vereisung und eine entsprechende Vorrichtung zu schaffen, die kostengünstig zu realisieren sind und eine schnelle und genaue Bestimmung des Oberflächenzustandes auch in tieferen Schichten der Oberfläche gestatten.

Diese Aufgabe wird erfindungsgemäß durch die kennzeichnenden Merkmale des Hauptanspruchs in Verbindung mit den Merkmalen des Oberbegriffs gelöst. Vorteilhafte Weiterbildungen und Ausgestaltungen dieser Aufgabenlösung ergeben sich für das Verfahren wie auch die zur Durchführung des Verfahrens erforderliche Vorrichtung aus den Unteransprüchen.

Mit dem vorliegenden erfindungsgemäßen Verfahren ist es erstmals möglich, eine praktisch momentane Erkennung von Eis- und Reifbildung an festen Flächen, wie Straßenbelägen, mittels spektralanalytischer Messung auch bei Berücksichtigung der Schichtdicke der Oberfläche festzustellen, und zwar in Abhängigkeit von dem jeweiligen Kristallisationsgrad, wobei die Flüssigkeit nicht ausschließlich Wasser sein muß, sondern es sich auch um eine andere erstarrungsfähige protische Flüssigkeit oder Lösung handeln kann, also beispielsweise auch um eine gefrierpunkterniedrigte Salzwasserlösung. Der Kristallisationsgrad des Wassers bzw. der Flüssigkeit läßt sich aus der Verschiebung der Absorptionsbanden von mindestens zwei Spektralabschnitten ermitteln, wobei Spektralbereiche herausgegriffen werden, bei denen der Unterschied des Reflexionsspektrums zwischen flüssigem und festem Aggregatzustand besonders deutlich hervortritt und bei denen die Eindringtiefe ausreichend groß ist, nämlich in der Größenordnung der üblicherweise auf Verkehrswegen stehenden Wasser- oder Eisschichten. Der bei dem erfindungsgemäßen aufgrund der gewünschten Eindringtiefe bedingte Einfluß des Untergrundes, zum Beispiel der Fahrbahndecke und einer Streuung des Materials, zum Beispiel des Eises der Oberflächenschicht, wird durch die Messung der reflektierten Strahlung in zwei weiteren Wellenlängenbereichen erfaßt, die von einer Absorption der Moleküle der protischen Flüssigkeit oder Lösung, unabhängig von dem Kristallisationsgrad, sehr wenig beeinflußt werden. Der Einfluß wird dann bei der Meßauswertung kompensiert.

Vorteilhaft ist es, die spektralanalytischen Messungen sowohl vor als hinter einer Radlauffläche eines Fahrzeuges vorzunehmen und die Auswertungen dann zueinander in Relation zu setzen, womit zusätzliche Aussagen, zum Beispiel zwischen Schneematsch und mit einem Wasserfilm bedeckten Eisschichten, vorgenommen werden können.

Durch die in den Unteransprüchen angegebenen Maßnahmen sind vorteilhafte Weiterbildungen und Verbesserungen möglich.

Ein Ausführungsbeispiel der Erfindung ist in der Zeichnung dargestellt und wird in der nachfolgenden Beschreibung näher erläutert. Es zeigen:

Fig. 1   Reflexionsspektren für trocknen Asphalt, Asphalt mit Wasser und Asphalt mit Eis und

Fig. 2   eine schematische Darstellung der erfindungsgemäßen Vorrichtung.

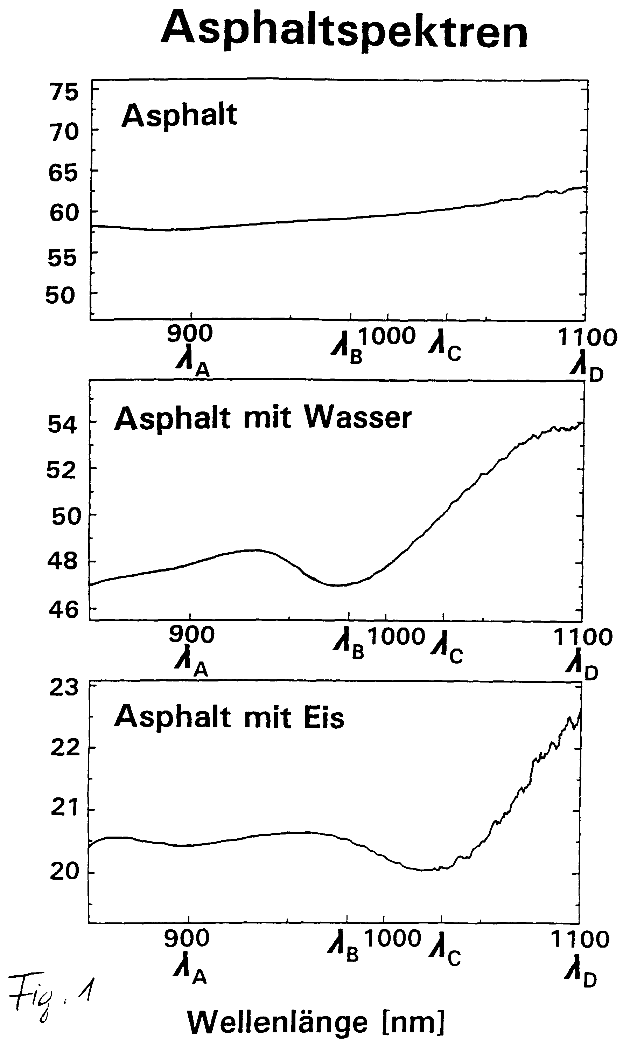

In Fig. 1 sind verschiedene Reflexionsspektren für einen Wellenlängenbereich von etwa 850 nm bis 1100 nm dargestellt, wobei das obere Spektrum für trocknen Asphalt, das mittlere Spektrum für Asphalt mit Wasser und das untere Spektrum für Asphalt mit Eis gilt. Aus den Spektren ist zu erkennen, daß sich in bestimmten Wellenlängenbereichen die Spektralwerte mit dem Kristallisationsgrad ändern. Durch Messen dieser Spektralwerte lassen sich somit Aussagen über den Kristallisationsgrad einer Fahrbahnoberfläche machen. Beispielsweise liegen die Absorptionsbande von Wasser unter anderem bei ca. 840 nm, 970 nm, 1170 nm und entsprechend für Eis bei 890 bis 920 nm, 1020 bis 1060 nm, 1260 bis 1290 nm und so weiter.

Bei diesen verschiedenen Wellenlängen kann eine auf eine Wasser-/Eisschicht gerichtete Strahlung unterschiedlich dicke Schichten durchdringen, ehe sie absorbiert wird, das heißt, die Eindringtiefe der elektromagnetischen Strahlung in die Schichten ändert sich mit der Wellenlänge. Als Beispiel werden für einige Wellenlängen bei Wasser und Eis die Eindringtiefen angegeben, wobei hier als Eindringtiefe die Tiefe bezeichnet wird, bei der das aufgestrahlte Licht bzw. die Strahlung auf 1/e abgefallen ist:

Wasser: 980 nm - 2,17 cm; 1200 nm - 0,7 cm; 1450 nm - 0,035 cm; 1920 nm - 0,007 cm; und bei 3000 nm nur wenige µm.

Eis: 1030 nm - 3,102 cm; 1240 nm - 0,72 cm; 1490 nm - 0,022 cm; 1980 nm - 0,0097 cm; und bei 3000 nm gleichfalls nur wenige µm.

Aus diesen Werten ist zu erkennen, daß im hohen Wellenlängenbereich beispielsweise von 3000 nm nur ein extrem dünner Oberflächenfilm erfaßt werden kann, so daß unterfrorene Nässe nicht bestimmt werden kann. Damit eine übliche auf Straßenbelägen vorhandene Wasserschicht bzw. Eisschicht über ihre ganze Dicke erfaßt werden kann, muß bei niedrigen Wellenlängen zum Beispiel bis zu 1300 nm gemessen werden. Wenn jedoch die Wellenlängenbereiche mit genügender, das heißt mit mindestens mehreren Millimetern Eindringtiefe, gewählt werden, werden bei der Messung von spektralen Reflexionsgraden die spektralen Eigenschaften des Straßenbelags miterfaßt. Als Beispiel ist in Fig. 1 der spektrale Reflexionsgrad von Asphalt angegeben, wobei die spektralen Eigenschaften grundsätzlich abhängig von der Korngröße sind. Für unterschiedliche Fahrbahnoberflächen verändern sich auch die Spektren des Reflexionsvermögens, wobei jedoch Messungen verschiedener Fahrbahnoberflächen gezeigt haben, daß die Reflektivität bzw. die Reflexionsgrade in dem interessierenden Wellenlängenbereich in den meisten relevanten Fällen linear approximiert werden können.

Da die spektralen Eigenschaften des Untergrundes bei den Reflexionsmessungen von nassen bzw. vereisten Oberflächen miterfaßt werden, müssen sie kompensiert werden. Um diese Kompensation durchzuführen, werden bei dem erfindungsgemäßen Verfahren Reflexionsmessungen bei zwei Wellenlängen vorgenommen, die invariant gegenüber einer Vereisung bzw. einer Kristallisation sind, um den Unter- bzw. Hintergrund zu bestimmen, und weiterhin werden Reflexionsmessungen bei zwei Wellenlängen vorgenommen, die die Wasser-/Eis-Information tragen. In Fig. 1 sind die Wellenlängen zur Bestimmung des Hintergrundes mit $\lambda_A$ und $\lambda_D$ und die Wellenlängen mit Wasser-/Eis-Information mit $\lambda_B$ und $\lambda_c$ bezeichnet.

Im folgenden wird auf die Auswertung einer Reflexionsmessung bei den vier Wellenlängenbereichen eingegangen. Um den Einfluß des Untergrundes zu erfassen, wird die Steigung der Hintergrundgeraden bestimmt, wobei die Signalspannung bei den Wellenlängen mit $S(\lambda)$ bezeichnet wird:

$$m = s(\lambda_D) - S(\lambda_A) \text{ dividiert durch } \lambda_D - \lambda_A.$$

Das Untergrund- bzw. Hintergrundsignal $S_H$ bei den Wellenlängen $\lambda_B$ und $\lambda_c$ bestimmt sich zu:

$$s_H(\lambda_B) = s(\lambda_A) + m(\lambda_B - \lambda_A)$$

$$s_H(\lambda_C) - S(\lambda_A) + m(\lambda_C - \lambda_A).$$

Diese Hintergrundsignale werden von den eigentlichen Signalen bei $\lambda_B$ und $\lambda_c$, zu hintergrundbereinigten Signalen abgezogen:

$$s'(\lambda_B) = S(\lambda_B) - S_H(\lambda_B)$$

$$s'(\lambda_C) = s(\lambda_C) - S_H(\lambda_C).$$

Das Reflexionsvermögen des Hintergrunds läßt das Gesamtniveau des rückgestreuten Lichts stark schwanken, deshalb müssen die Werte $s'(\lambda_B)$ und $s'(\lambda_c)$ mit der "mittleren Helligkeit" $s_G = s[\lambda_A] + s[\lambda_D] / 2$ normiert werden:

$$S''(\lambda_B) = S'(\lambda_B) / S_G \text{ und}$$

$$S''(\lambda_C) = S'(\lambda_C) / S_G.$$

Die Summe aus $S''(\lambda_B)$ und $s''(\lambda_c)$ ist ein Maß für die insgesamt vorhandene Feuchtigkeitsmenge, das heißt für die insgesamt vorhandenen Wassermoleküle. Die Differenz der beiden Werte $(S''(\lambda_B) - s''(\lambda_c)$ und der Quotient der beiden Werte $(S''(\lambda_B) / S''(\lambda_c)$ sind beide ein Maß für den Anteil des bereits gefrorenen Materials an der gesamten Feuchtigkeits- bzw. Wassermolekülmenge. $S''(\lambda_B)$ und $S''(\lambda_c)$ sowie ihre Summe korrelieren mit der Dicke einer Wasser- oder Eisschicht, wobei die Streuung im Eis bei der Korrelation berücksichtigt werden kann. Es lassen sich somit die Dicken von Wasser- und/oder Eisschichten abschätzen, selbst wenn beide gleichzeitig vorhanden sind.

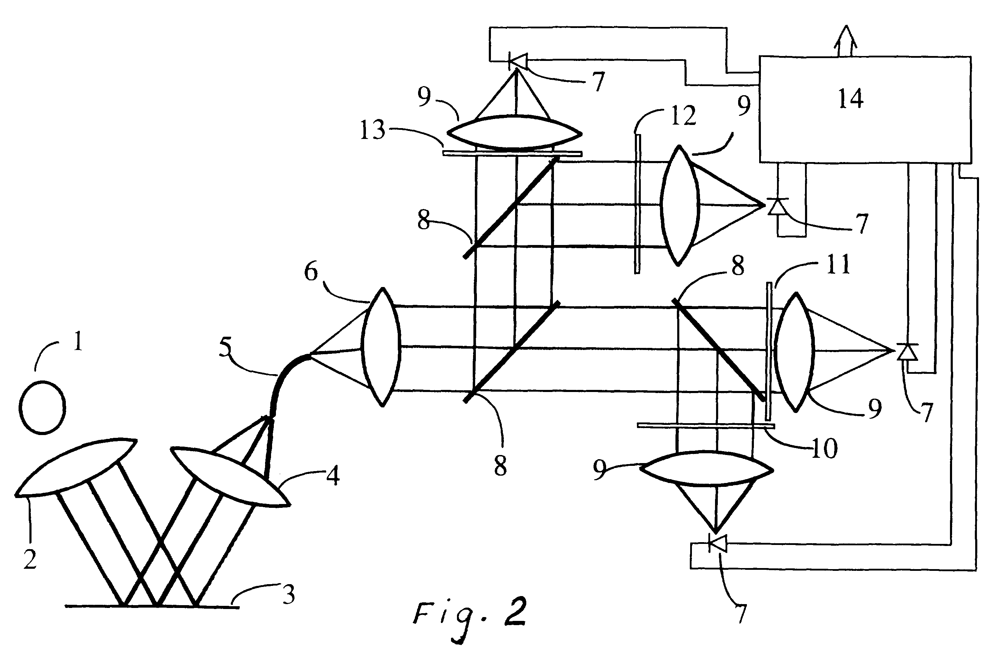

Eine vorteilhafte Ausführungsform einer Meßanordnung zur Durchführung des erfindungsgemäßen Verfahrens ist schematisch in Fig. 2 dargestellt. Danach wird die elektromagnetische Strahlung einer Licht- oder Strahlungsquelle 1, beispielsweise einer diffusen Weißlichtquelle mit einem für die Messung ausreichenden Infrarotanteil über eine Kondensoroptik 2 auf die zu überprüfende Oberfläche 3 gegeben. Derjenige Anteil der elektromagnetischen Strahlung, der von der Oberfläche 3 reflektiert wird, wobei es sich je nach Oberflächenbeschaffenheit in aller Regel um eine diffuse Reflexion handeln wird, wird über eine Sammeloptik 4 auf die Eintrittsfläche eines Lichtleiters 5 abgebildet, der beispielsweise die Strahlung ortsgenau auf die Empfänger- und Auswerteeinheiten leitet, die beispielsweise im Innenraum eines Kraftfahrzeuges angeordnet sind. Die aus dem Lichtleiter austretende Strahlung wird über einen weiteren Kondensor 6 gleichzeitig auf vier Empfänger 7 geleitet, wobei die Strahlung über drei halbdurchlässige Spiegel 8 mit jeweils 50 % Reflexion und 50 % Transmission aufgeteilt und über Sammellinsen 9 auf die Empfänger 7 projiziert wird. Dabei sind vor den Sammellinsen 9 jeweils wellenlängenselektive Filter 10, 11, 12, 13 angeordnet, die die Wellenlängen $\lambda_A$ bis $\lambda_D$ von zum Beispiel 920, 980, 1030 und 1080 nm durchlassen.

Die Empfänger 7 sind mit einer Auswerteeinheit 14 verbunden, indem die Auswertung entsprechend den oben angegebenen Bewertungen durchgeführt wird. Der Ausgang der Auswerteeinheit, die als Mikrocomputer ausgebildet sein kann, ist mit einer Anzeigeeinheit und/oder einer Warneinrichtung verbunden. Die Empfänger 7 können als diskrete Dioden ausgebildet sein, es können jedoch auch schnellansprechende, hochlichtempfindliche Arrays, wie zum Beispiel Diodenarrays, CCD-Arrays oder dergleichen verwendet werden. Wichtig bei der Messung ist, daß der gesamte Querschnitt des von der zu betrachtenden Oberfläche 3 reflektierten Lichtbündels ortsunabhängig auf jeden Empfänger abgebildet wird, damit eine ortsunabhängige Auswertung vorgenommen werden kann.

Die Ausführungsform nach Fig. 2 ist nur ein Beispiel, es ist auch denkbar, daß anstelle der halbdurchlässigen Spiegel 8 und der wellenlängenselektiven Filter ein Dispersionselement, das als Beugungsgitter oder Prisma ausgebildet ist, vorgesehen wird, auf dem die Strahlung wellenlängenselektiv aufgespalten wird, wobei die Empfänger, beispielsweise über Lichtleiter, den Wellenlängen auf dem Beugungsgitter örtlich zugeordnet sind.

Die Auswerteeinheit 14 wertet abhängig von dem mehr oder weniger vorhandenen kristallinen Zustand der Oberfläche 3, das heißt hier des Fest/Flüssigwassers, das für diesen charakteristische reflektierte Spektrum aus. Die Auswertung kann entsprechend dem obigen Verfahren schrittweise durchgeführt werden. Die Auswerteeinheit 14 kann jedoch die Auswertung über auf neuronalen Netzwerken durchgeführten entsprechenden Algorithmen, zusammen mit einer Entscheidungslogik, die auf der Fuzzy-Logik basiert, das heißt aufbauend auf der Theorie unscharfer Mengen, vornehmen, so daß sich hier die Möglichkeit der Auswertung bei hoher Aussagegenauigkeit auch für sehr verwischte Spektrenbilder ergibt. Aufgrund der Auswertung können auch unterschiedlich dicke Wasserschichten über Eis oder Schneematsch erkannt werden.

Zur Vermeidung von Fremdlicht und anderen Einflußgrößen kann eine Intensitätsmodulation der Lichtquelle 1 über ein Chopperrad oder eine elektronische Leistungsregelung vorgenommen werden.

Die erfindungsgemäße Meßanordnung wird an einem Fahrzeug vorzugsweise in unmittelbarer Nähe der Spur angeordnet. Werden zwei derartige Meßanordnungen, und zwar einmal in Fahrtrichtung vor der Spur zum anderen in Fahrtrichtung hinter der Spur vorgesehen, so lassen sich hier durch Vergleichsmessungen auch Schlüsse ziehen, die gegebenenfalls nicht nur auf Glättegefahr hinweisen, sondern beispielsweise auch auf solche, die durch Aquaplaning entstehen können.

Mit der erfindungsgemäßen Vorrichtung können auch Informationen über die Mikrorauhigkeit des Straßenbelags geliefert werden, da das Verhältnis der oben bestimmten Werte m (Steigung der Spektralkurve des Hintergrundes) und $s_G$ ("mittlere Helligkeit") ein Maß für die Wellenlängenabhängigkeit des Streuvermögens der Fahrbahn ist. Den größten Anteil an dieser Wellenlängenabhängigkeit hat die Korngröße der streuenden Partikel (Mie-Streuung). $m/S_G$ kennzeichnet somit die Mikrorauhigkeit des Straßenbelags, die für die Beurteilung der Reifenhaftung auf der Fahrbahn wesentlich ist. Dies gilt nicht nur bei trocknem Belag, sondern beispielsweise auch bei Schnee, da auch hier die Korngröße abhängig von der Art des Schnees variiert.

**Patentansprüche**

1. Verfahren zum Feststellen des Oberflächenzustandes, insbesondere von Verkehrswegen hinsichtlich Trockenheit, Nässe oder Vereisung, bei dem die Oberfläche mit einer Strahlungsquelle mit Infrarotanteil bestrahlt wird und die reflektierte Strahlung gleichzeitig in verschiedenen Wasser und Eis charakterisierenden Wellenlängenbereichen gemessen wird, wobei abhängig von den gemessenen Signalen eine Aussage über den Oberflächenzustand getroffen wird,
**dadurch gekennzeichnet,** daß die reflektierte Strahlung gleichzeitig in mindestens vier Wellenlängenbereichen selektiv gemessen wird, die im Gebiet zwischen 800 und 1250 nm liegen, wobei ein erster und ein zweiter Wellenlängenbereich so gewählt werden, daß sie von einer Absorption der Wassermoleküle, unabhängig vom Aggregatzustand, wenig beeinflußt werden, und ein dritter und vierter Wellenlängenbereich so gewählt werden, daß sie kennzeichnend für Wasser und Eis sind, und daß ein durch die Eindringtiefe hervorgerufener Einfluß des Untergrundes auf die im dritten und vierten Wellenlängenbereich gemessenen Signale mittels der Information der im ersten und zweiten Wellenlängenbereich gemessenen Signale kompensiert wird.

2. Verfahren nach Anspruch 1, dadurch gekennzeichnet, daß der dritte und vierte Wellenlängenbereich zwischen 900 und 1100 nm gewählt wird.

3. Verfahren nach Anspruch 1 oder 2, dadurch gekennzeichnet, daß aus dem Verhältnis und/oder der Differenz der kompensierten Signale die Anteile von Wasser und Eis an der Gesamtfeuchtigkeitsmenge bestimmt werden.

4. Verfahren nach einem der Ansprüche 1 bis 3, dadurch gekennzeichnet, daß der gesamte Querschnitt der von der Oberfläche reflektierten Strahlung für jeden Wellenlängenbereich ortsunabhängig gemessen wird.

5. Vorrichtung zum Feststellen des Oberflächenzustandes insbesondere von Verkehrswegen hinsichtlich Trockenheit, Nässe oder Vereisung, mit einer Strahlungsquelle (1) mit Infrarotanteil zum Bestrahlen der Oberfläche (3), einer Kondensoroptik (2) im Strahlengang vor der zu prüfenden Oberfläche (3), einer den reflektierten Anteil der elektromagnetischen Strahlung sammelnden optischen Anordnung (4) und einer wellenlängenselektriven Empfängeranordnung (7 bis 13), die die reflektierte Strahlung entsprechend mehreren Wellenlängenbereichen empfängt, und einer Auswerteeinheit (14) zum Auswerten der wellenlängenselektiven Signale, dadurch gekennzeichnet, daß die Empfängeranordnung (7 bis 13) für den Empfang von Strahlung in vier Wellenlängenbereichen im Gebiet zwischen 800 und 1250 nm vorgesehen ist, wobei ein erster und ein zweiter Wellenlängenbereich so gewählt sind, daß sie von einer Absorption der Wassermoleküle, unabhängig vom Aggregatzustand, wenig beeinflußt werden, und ein dritter und vierter Wellenlängenbereich so gewählt sind, daß sie kennzeichnend für Wasser und Eis sind, und daß die Auswerteeinheit (14) zur Kompensation eines Einflusses des Untergrundes auf die im dritten und vierten Wellenlängenbereich gemessenen Signale mittels der Information der im ersten und zweiten Wellenlängenbereich gemessenen Signale vorgesehen ist.

6. Vorrichtung nach Anspruch 5, dadurch gekennzeichnet, daß die Empfängeranordnung drei Strahlteiler (8) zum Aufspalten der reflektierten Strahlung in vier Strahlengänge identischer Ortsinformation und vier wellenlängenselektive Filter (10 bis 13) vor den jeweiligen Empfängern (7) aufweist, die einen Durchlaßwellenlängenbereich zwischen 800 und 1250 nm aufweisen.

7. Vorrichtung nach Anspruch 5, dadurch gekennzeichnet, daß die Empfängerordnung ein räumlich dispersives Element in Form wenigstens eines Gitters oder Prismas aufweist, das ein wellenlängenselektives Beugungsspektrum im Wellenlängenbereich zwischen 800 und 1250 nm bildet, und daß diesem dispersiven Element Empfänger örtlich zugeordnet sind.

8. Vorrichtung nach einem der Ansprüche 5 bis 7, dadurch gekennzeichnet, daß die Empfänger als Array-Detektor ausgebildet sind.

9. Vorrichtung nach einem der Ansprüche 5 bis 8, dadurch gekennzeichnet, daß sie an Fahrzeugen vor und/oder hinter einer Fahrzeugspur angeordnet ist.

10. Verwendung der Vorrichtung nach einem der Ansprüche 5 bis 9 zur Bestimmung der Rauhigkeit eines Fahrbahnbelages.

## Claims

1. Process for determining the surface state, in particular of highways with respect to dryness, wetness or icing, in which the surface is irradiated by a radiation source with an infrared component, and the reflected radiation is simultaneously measured in different wavelength ranges which characterise water and ice, and a statement regarding the surface state is made in dependence of the measured signals, **characterised in that** the reflected radiation is simultaneously and selectively measured in at least four wavelength ranges between 800 and 1,250 nm, and a first and a second wavelength range is chosen in such a manner that they are little influenced by absorption of the water molecules and independent of the state of the aggregate; and a third and fourth wavelength range is chosen in such a manner that they are characteristic for water and ice, and an influence of the base on signals measured in the third and fourth wavelength range as caused by the penetration depth is compensated by means of information given by signals measured in the first and second wavelength range.

2. Process according to Claim 1, **characterised in that** the third and fourth wavelength range is selected between 900 and 1,100 nm.

3. Process according to Claim 1 or 2, **characterised in that** the content of water and ice in the total moisture volume is determined from the ratio and/or the difference of the compensated signals.

4. Process according to one of Claims 1 to 3, **characterised in that** the total cross-section of radiation reflected from the surface is measured for each wavelength range independently from location.

5. Device for determining the surface state, in particular of highways with respect to dryness, wetness or icing, with a radiation source (1) with an infrared component for irradiation of the surface (3), a condenser optics (2) in the beampath ahead of the surface (3) to be tested, an optical array (4) which gathers the reflected portion of electro-magnetic radiation and a wavelength selective receiver arrangement (7 to 13) which receives the reflected radiation corresponding with a plurality of wavelength ranges, and an evaluation unit (14) for evaluation of wavelength selective signals, **characterised in that** the receiver arrangement (7 to 13) is provided for receiving radiation in four wavelength ranges between 800 and 1,250 nm, and a first and a second wavelength range is chosen so that they are little affected by an absorption of the water molecules, independently from the state of the aggregate; and a third and fourth wavelength range is selected so that they are characteristic of water and ice; and the evaluation unit (14) is provided for compensating an influence of the base on signals measured in the third and fourth wavelength range by means of information of signals measured in the first and second wavelength range.

6. Device according to Claim 5, **characterised in that** the receiver arrangement comprises three radiation splitters (8) for splitting reflected radiation into four beampaths of identical spatial information and four wavelength selective filters (10 to 13) in front of the respective receivers (7) with a forward wavelength range between 800 and 1,250 nm.

7. Device according to Claim 5, **characterised in that** the receiver arrangement comprises a spatially dispersive element in the form of at least one grid or prism which forms a wavelength selective diffraction spectrum in a wavelength range between 800 and 1,250 nm, and this dispersive element is spatially associated with receivers.

8. Device according to one of Claims 5 to 7, **characterised in that** the receivers are designed as array detectors.

9. Device according to one of Claims 5 to 8, **characterised in that** they are arranged on vehicles in front of and/or behind a vehicle track.

10. Use of the device according to one of Claims 5 to 9 for the purpose of determining the roughness of a highway surface layer.

**Revendications**

1. Procédé de détermination de l'état d'une surface, en particulier celui de voies de circulation, quant à l'état sec, mouillé ou verglacé de celle(s)-ci, procédé dans lequel la surface est soumise à un rayonnement d'une source de rayonnement présentant une part infrarouge, et dans lequel le rayonnement réfléchi est mesuré simultanément dans différentes plages de longueurs d'ondes qui sont caractéristiques d'eau et de verglas, où une évaluation de l'état de la surface est faite en fonction des signaux mesurés, caractérisé en ce que le rayonnement réfléchi est mesuré simultanément, de façon sélective, dans quatre plages de longueurs d'ondes, qui se situent dans une zone comprise entre 800 et 1250 nm, une première plage et une deuxième plage de longueurs d'ondes étant choisies de manière telle qu'elles subissent peu d'influences par une absorption par les molécules d'eau, indépendamment de l'état d'agrégation de celles-ci, et une troisième plage et une quatrième plage de longueurs d'ondes étant choisies de manière telle qu'elles soient caractéristiques d'eau et de verglas, et en ce qu'une influence qu'exerce le support sous-jacent sur les signaux mesurés dans les troisième et quatrième plages de longueurs d'ondes, cette influence résultant de la profondeur de pénétration, est compensée par l'information des signaux mesurés dans les première et deuxième plages de longueurs d'ondes.

2. Procédé selon la revendication 1, caractérisé en ce que les troisième et quatrième plages de longueurs d'ondes sont choisies entre 900 et 1100 nm.

3. Procédé selon les revendications 1 ou 2, caractérisé en ce que les parts que représentent l'eau et le verglas dans la quantité d'humidité totale sont déterminées à partir du rapport et/ou de la différence entre les signaux compensés.

4. Procédé selon l'une des revendications 1 à 3, caractérisé en ce que la section totale du rayonnement réfléchi par la surface est mesurée de façon indépendante de la position, pour chacune des plages de longueurs d'ondes.

5. Dispositif de détermination de l'état d'une surface, en particulier celui de voies de circulation, quant à l'état sec, mouillé ou verglacé de celle(s)-ci, comprenant une source de rayonnement (1) produisant une part d'infrarouge, destinée à exposer la surface (3) à un rayonnement, un système optique (2) à condenseur disposé dans le chemin des rayons, en amont de la surface (3) à examiner, un agencement optique (4) de convergence pour la part réfléchie du rayonnement électromagnétique, et un agencement de récepteurs (7 à 13) sélectifs en longueur d'onde, recevant le rayonnement réfléchi dans plusieurs plages de longueurs d'ondes, et une unité d'analyse (14) destinée à analyser les signaux sélectifs en longueur d'onde, caractérisé en ce que l'agencement de récepteurs (7 à 13) est prévu pour recevoir un rayonnement dans quatre plages de longueurs d'ondes, dans une zone comprise entre 800 et 1250 nm, une première plage et une deuxième plage de longueurs d'ondes étant choisies de manière telle qu'elles subissent peu d'influences par une absorption par les molécules d'eau, indépendamment de l'état d'agrégation de celles-ci, et une troisième plage et une quatrième plage de longueurs d'ondes étant choisies de manière telle qu'elles soient caractéristiques d'eau et de verglas, et en ce que l'unité d'analyse (14) est prévue pour compenser une influence qu'exerce le support sous-jacent sur les signaux mesurés dans les troisième et quatrième plages de longueurs d'ondes, à l'aide des informations des signaux mesurés dans les première et deuxième plages de longueurs d'ondes.

6. Dispositif selon la revendication 5, caractérisé en ce que l'agencement de récepteurs comporte trois diviseurs de rayonnement (8) destinés à diviser le rayonnement réfléchi en quatre rayons porteurs d'informations de position identiques, et quatre filtres (10 à 13) sélectifs de la longueur d'onde, disposés avant les récepteurs correspondants (7) et présentant une plage passante de longueurs d'ondes comprise entre 800 et 1250 nm.

7. Dispositif selon la revendication 5, caractérisé en ce que l'agencement de récepteurs comporte un élément de dispersion spatiale sous forme d'au moins une grille ou d'un prisme, qui forme un spectre de diffraction sélectif en longueur d'onde compris entre 800 et 1250 nm, et en ce que des récepteurs sont associés localement à cet élément de dispersion.

8. Dispositif selon l'une des revendications 5 à 7, caractérisé en ce que les récepteurs sont configurés sous forme de récepteurs en rangée, dits array.

9. Dispositif selon l'une des revendications 5 à 8, caractérisé en ce qu'il est monté sur des véhicules et disposé devant et/ou derrière une voie du véhicule.

10. Mise en oeuvre du dispositif selon l'une des revendications 5 à 9 pour la détermination de la rugosité d'un revêtement de route.

# Asphaltspektren

Fig. 1

Wellenlänge [nm]

Fig. 2